Europäisches Patentamt

European Patent Office

Office européen des brevets

(11) Veröffentlichungsnummer: **0 226 848**
**A2**

(12) **EUROPÄISCHE PATENTANMELDUNG**

(21) Anmeldenummer: 86116334.3

(22) Anmeldetag: 25.11.86

(51) Int. Cl.4: **B29D 11/00** , B29C 45/57 ,
B29C 45/73 , B29C 45/26

(30) Priorität: 07.12.85 DE 3543357

(43) Veröffentlichungstag der Anmeldung:
01.07.87 Patentblatt 87/27

(84) Benannte Vertragsstaaten:
AT BE CH DE ES FR GB IT LI NL SE

(71) Anmelder: BAYER AG
Konzernverwaltung RP Patentabteilung
D-5090 Leverkusen 1 Bayerwerk(DE)

(72) Erfinder: Wingler, Frank, Dr.
Walter-Flex Strasse 17
D-5090 Leverkusen 1(DE)
Erfinder: Wiegel, Dietmar
Strässchen 37
D-5093 Burscheid(DE)
Erfinder: Geyer, Otto-Christian, Dr.
Bahnhofstrasse 12
D-6330 Wetzlar(DE)

(54) Verfahren und Vorrichtung zur Herstellung von Kontaktlinsen-Rohlingen mit fertig ausgebildeten Rückflächen-Geometrien.

(57) Das Spritzpreßverfahren wird mit einem aufheizbaren Formwerkzeug durchgeführt, das im wesentlichen aus einem Bodenstempel (1), einer auf dem
Bodenstempel (1) mit Dichtlippen (6) dicht aufliegenden Führungshülse (5) und einem in der
Führungshülse (5) axial verschiebbaren Oberstempel
(7, 8) mit einer der Rückflächen-Geometrie der Kontaktlinse angepaßten Stempel-Oberfläche besteht.
In einem ersten Schritt wird die Schmelze des
thermoplastischen Ausgangsmaterials durch einen
Angußkanal (3) in die Form (4) eingespritzt. In einem
zweiten Schritt wird dann der Angußkanal (3) des
noch heißen Formwerkzeuges mit einer Gegenplatte
(11) verschlossen und das Formwerkzeug in eine
Spannvorrichtung eingelegt, so daß der
Kontaktlinsen-Rohling (16) in der Form unter Druck
erkaltet.

FIG. 1

## Verfahren und Vorrichtung zur Herstellung von Kontaktlinsen-Rohlingen mit fertig ausgebildeten Rückflächen-Geometrien

Die vorliegende Erfindung betrifft ein Spritzpreßverfahren zur Herstellung von Kontaktlinsen-Halbfertigzeugen aus thermoplastischen Polymeren mit bereits fertig ausgebildeten Rückflächen definierter Innengeometrien, auf die zur Herstellung von Kontaktlinsen nur noch die den Scheitelbrechwerten entsprechenden Stirnflächen-Geometrien durch Drehen und Polieren aufgebracht werden müssen. Ferner betrifft die Erfindung eine Vorrichtung zur Durchführung des Verfahrens.

Die ophthalmologische Forschung der letzten Jahre hat gezeigt, daß die Verträglichkeit einer Kontaktlinse oder -schale nicht nur von der Natur des polymeren Materials, aus dem sie hergestellt wurde, sondern ganz entscheidend von der Innengeometrie der dem Auge zugewandten Seite und deren Stabilität abhängig ist. Man bevorzugt heute Kontaktlinsen, welche asphärische Innenflächen mit definierten Abflachungen zum Rand hin aufweisen. So wird erreicht, daß die Kontaktlinse auf einem Tränenflüssigkeitsfilm schwimmt, der bei Lid-und Augenbewegungen fließt und somit einen Austausch von Nährstoffen und einen Abtransport von Metaboliten gewährleistet. Im folgenden sollen unter dem Sammelbegriff "Kontaktlinsen" jeweils Linsen und Schalen verstanden werden. In Betracht zu ziehende Schriften sind DE-OS 34 15 022, DE-OS 29 41 264, DE-OS 28 08 444, DE-OS 28 06 388, DE-PS 26 47 170, US-PS 4 463 148, PCTW 684/04720.

Von thermoplastischen Materialien zur Herstellung von Kontaktlinsen wird daher nicht nur eine ausgezeichnete Biokompatibilität, sondern auch eine hohe Formstabilität über längere Tragezeitdauern hinweg erwartet. Ein in der Praxis häufig verwendeter Herstellprozeß für kontaktoptische Gegenstände ist das Prägen, Drehen und Polieren aus Knöpfen (sogenannten Blanks), die in etwa - schon den Durchmesser der gewünschten Kontaktlinse besitzen, bzw. das thermische Verformen in fester Phase, vgl. hierzu die Schriften DE-OS 27 29 385, DE-OS 21 52 062 und US-PS 2 302 918.

Von kontaktoptischen Gegenständen wird von der Augenmedizin gefordert, daß sie eine Oberflächenrauhtiefe von unter 0,1 $\mu$m, bevorzugt unter 0,05 $\mu$m, besitzen. Darüber hinaus sollen die Krümmungsradien der sphärischen Grundkurve der üblichen Innenflächen-Geometrien, die in der Größenordnung um 8 mm liegen, sich im Laufe der Tragezeit einer Kontakt linse um weniger als ± 0,02 mm ändern. Bedenkt man, daß eine moderne Kontaktlinse an ihren Randzonen nur noch eine Dicke von etwa 0,12 mm aufweist, so wird verständlich, daß die geforderten Toleranzen für die Innenflächen nur unter Anwendung technisch sehr aufwendiger und zeitraubender Dreh-und Polierverfahren einzuhalten sind.

Verschiedentlich wurden Versuche unternommen, Kontaktlinsen aus thermoplastischen Materialien durch Spritzgießen herzustellen. Jedoch führt diese Methode nicht zu spannungsfreien Linsen, frei von optischen Verzerrungen und Schlieren. Zudem ist die Fertigung von herkömmlichen Spritzguß-Formwerkzeugen aus Metall mit einer für die Linsenherstellung notwendigen Präzision und mit geringer Rauhtiefe sehr aufwendig.

Ziel der Erfindung war es nun, einen neuen Herstellweg für Kontaktlinsen-Halbfertigzeuge aus thermoplastischen Polymeren zu finden, aus denen sich mit geringem Aufwand weitgehend spannungsfreie Kontaktlinsen mit hoher Stabilität auch komplizierter Innenflächen-Geometrien herstellen lassen.

Gegenstand der vorliegenden Erfindung ist demnach ein Verfahren zur Herstellung eines spannungs-und schlierenfreien Kontaktlinsen-Halbzeugs mit vollständig ausgebildeter Rückflächen-Geometrie durch Spritzgießen von thermoplastischen Materialien für die Fertigung von Kontaktlinsen, welches erfindungsgemäß durch die folgenden Arbeitsschritte gekennzeichnet ist:

a) Einspritzen der heißen Polymerschmelze durch einen Angußkanal in ein aufgeheiztes Formwerkzeug mit einem Bodenstempel, einer auf dem Bodenstempel mit Dichtlippen dicht aufliegenden Führungshülse und einem in der Führungshülse axial verschiebbaren Oberstempel mit einer der Rückflächen-Geometrie der Kontaktlinse angepaßten konvexen Stempeloberfläche und

b) Verschließen des Angußkanals des noch heißen Formwerkzeuges mit einer Gegenplatte, Einlegen des Formwerkzeuges in eine Spannvorrichtung und Erkalten des Halbfertigzeuges unter Druck.

Gegenstand der Erfindung ist weiterhin ein Formwerkzeug zur Durchführung des erfindungsgemäßen Verfahrens. Das Formwerkzeug ist erfindungsgemäß gekennzeichnet, durch eine zylindrische Führungshülse, die an der einen Seite mit einem Bodenstempel abgeschlossen ist, durch den ein Angußkanal hindurchgeführt ist, und auf der anderen Seite einen in der Führungshülse axial verschiebbaren Oberstempel aufweist, der eine der Rückflächen-Geometrie des Kontaktlinsen-Halbfertigzeuges entsprechende konvexe Kontur besitzt.

Vorzugsweise besteht der konvexe Oberstempel aus zwei Teilen, nämlich einem Metallteil mit planarer Oberfläche und einem an das Metallteil bündig anschließenden geschliffenen und polierten Glasteil, dessen konvexe Oberfläche entsprechend der Rückflächen-Geometrie des Kontaktlinsen-Halbfertigzeugs geformt ist. Die geschliffene und polierte Glasoberfläche des konvexen Oberstempels ist ein genaues Abbild der konkaven Kontaktlinsen-Halbfertigzeug-Innenfläche.

Das erfindungsgemäße Verfahren kann mit Hilfe einer handelsüblichen Spritzgußmaschine durchgeführt werden, in die das aufgeheizte Formwerkzeug eingelegt wird. Sodann wird der zu verarbeitende Thermoplast in die Formavität eingespritzt, wobei das Formwerkzeug von den Backen der Spritzgußmaschine zugehalten wird. Danach wird das gefüllte Formwerkzeug aus der Spritzgußmaschine noch heiß entnommen, mit einer abgepaßten Bodenplatte der Angußkanal verschlossen und das gefüllte Formwerkzeug in einer Spannvorrichtung unter Druck langsam abgekühlt. Während des Erkaltens wirkt also auf das thermoplastische Material zwischen dem verschiebbaren Oberstempel und dem starren Bodenstempel ein relativ hoher Druck.

Als thermoplastische Materialien kommen alle mit dem Auge verträglichen transparenten Polymere in Frage, wie Celluloseester, aliphatische Carbonsäuren, Polymethylmethacrylat, Copolymere von (Meth)Acrylsäurealkyl-oder -cycloalkylestern mit z.B. Vinylpyrrolidon, aromatische Polycarbonate, transparente amorphe aromatisch/aliphatische Polyamide und aromatisch/aliphatische Polyester, Polyolefine wie z.B. Poly-1-methyl-penten-4 sowie Copolymerisate von Ethylen mit Vinylacetat bzw. deren teilverseifte Produkte. Auch Polymerblends, wie sie z.B. in DE-OS 28 07 663, DE-OS 33 14 188 und US-PS 4 263 183 beschrieben sind, sind für das erfindungsgemäße Verfahren geeignet.

Weitere bevorzugte Ausführungsformen sind in den Unteransprüchen beschrieben.

Im folgenden wird die Erfindung anhand eines in der Zeichnung dargestellten Ausführungsbeispieles näher beschrieben. Es zeigen:

Fig. 1 das Formwerkzeug zur Durchführung des erfindungsgemäßen Verfahrens und

Fig. 2 ein nach dem erfindungsgemäßen Verfahren hergestelltes Kontaktlinsen-Halbfertigzeug.

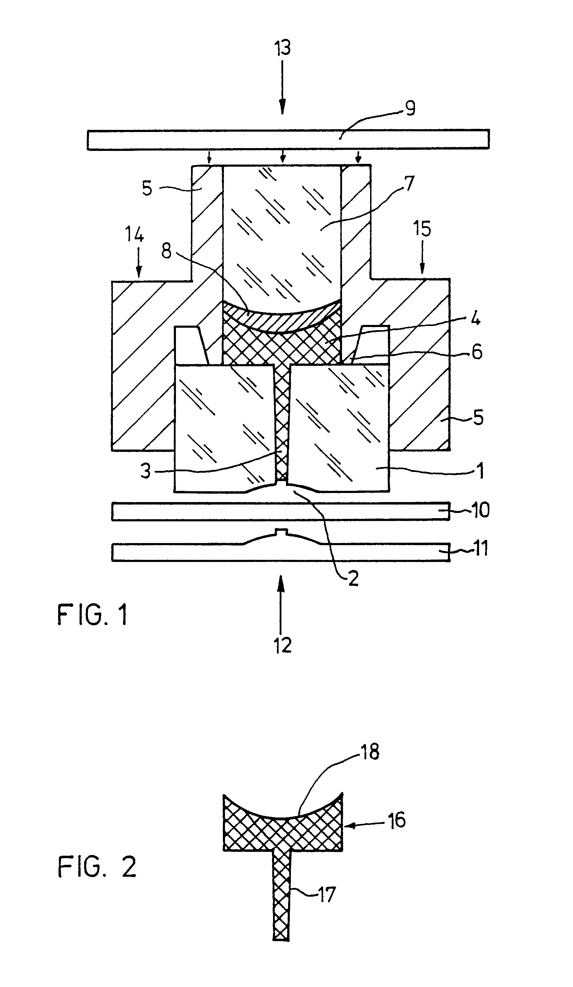

Gemäß Fig. 1 weist das Formwerkzeug einen Bodenstempel 1 aus Metall mit einem axial hindurchgeführten Angußkanal 3 auf. Der Kanal 3 ist konisch ausgelegt und führt von der Unterseite des Bodenstempels 1 zur Formkavität 4. Auf dem Bodenstempel 1 ist eine Führungshülse 5 lose aufgesetzt, die mit den Dichtlippen 6 dicht auf dem Bodenstempel 1 abdichtet. In der Führungshülse 5 ist ein axial verschiebbarer Oberstempel 7 angeordnet, der auf seiner Stirnseite ein Glasteil 8 mit einer konvex gekrümmten, geschliffenen und polierten Oberfläche trägt. Das Glasteil 8 schließt über eine ebenfalls konvex gekrümmte Fläche bündig an den Oberstempel 7 an. Diese Zwischenfläche kann aber auch planar ausgebildet sein.

Durch die konvexe Oberfläche des Glasteils 8 wird die Geometrie der Kontaktlinsen-Rückfläche, die später dem Auge zugewandt ist, vorgegeben. Bei der Gestaltung der Stempel-Geometrie können alle derzeit verfügbaren Erkenntnisse und zukünftigen Fortschritte hinsichtlich der Kontaktlinsen-Innenkontur und der Gestaltung der randnahen Zonen (Abflachungen, Begünstigung des Tränenflüssigkeit-Austauschs usw.) berücksichtigt werden.

Normalerweise ist die Bearbeitung derartiger asphärischer Flächen ein erhebliches fertigungstechnisches Problem, das nur mit hohem maschinenbautechnischen Aufwand und besonderer Sorgfalt bei der Fertigung gelöst werden kann - (siehe z.B. E. Heynacher: "Asphärische Optik - Warum sie gefordert und wie sie gefertigt wird", Zeiss-Informationen 24, 19-25 (1978/79) Heft 88 und E. Heynacher: "Fertigung und Prüfung asphärischer Flächen - Stand der Technik in der BRD", Feinwerktechnik und Meßtechnik 92, Heft 1, Jan./Febr. 1984, 1-5). Besondere Aufmerksamkeit erfordert das anschließende Polieren, da hierbei die vorgegebene Geometrie der Innenfläche der Kontaktlinse nur schwer einzuhalten ist. Abweichungen von der asphärischen Flächenform können dann die Verträglichkeit einer Kontaktlinse negativ beeinflussen. Bei Anwendung des erfindungsgemäßen Verfahrens muß der hohe Fertigungsaufwand jedoch nicht mehr an den einzelnen Kontaktlinsen-Individuen betrieben werden. Vielmehr wird es vorteilhafterweise möglich, die einmal auf dem Oberstempel 7, 8 erzeugte (negative) Idealgeometrie der Kontaktlinsen-Innenfläche in hoher Präzision mit geringem Fertigungsaufwand und somit sehr kostengünstig auf Kontaktlinsen-Rohlinge zu übertragen. Die von der Augenmedizin gewünschten, äußerst kompliziert gekrümmten Innenflächen-Geometrien brauchen also nicht mehr in aufwendigen Verfahren gefräst, geschliffen und poliert zu werden.

Überraschend ist ferner, daß die aus den erfindungsgemäßen Rohlingen hergestellten Kontaktlinsen verspannungsfrei sind, obwohl beim Spritzgießen bekanntermaßen leicht Verspannungen entstehen. Demzufolge zeichnen sich die fertigen Kontaktlinsen durch eine besonders hohe Stabilität der Radien und Geometrien der Basiskurven aus.

Das Formwerkzeug wird auf Temperaturen gebracht, die 20°C bis 80°C oberhalb der Glasübergangstemperatur der zu verarbeitenden thermoplastischen Materialien liegen.

Die Glasübergangstemperatur läßt sich am zweckmäßigsten mittels der thermomechanischen Analyse ermitteln, bei der ein Probekörper langsam erwärmt und das Eindringen einer mit Gewichten belasteten Nadel in den Probekörper verfolgt wird. Die Glasübergangstemperatur wird durch Anlegen einer Tangente an die Eindringkurve bestimmt. Bei bestimmten optischen Polymethylmethacrylat-Gläsern liegt sie beispielsweise bei 113°C. Die Umformtemperatur im Schritt b) des erfindungsgemäßen Herstellverfahrens beträgt in diesem Fall bevorzugt 133°C bis 193°C.

Das erwärmte Formwerkzeug wird in die Zuhaltevorrichtung einer herkömmlichen Spritzgußmaschine eingelegt. Es kommen sowohl Kolben-wie auch Schnecken-Spritzgußmaschinen in Frage. Das Werkzeug wird durch Andrücken der Zuhaltevorrichtung mit den Platten 9 und 10 zugehalten. Nun kann auf die Mündung 2 des Angußkanals 3 die Düse der Spritzgußmaschine aufgesetzt werden und das geschmolzene thermoplastische Material durch den Angußkanal 3 in die Kavität 4 gepreßt werden. Die Polymerschmelze soll eine Temperatur besitzen, die 50°C bis 150°C oberhalb der Glasübergangstemperatur liegt. Die Kavität füllt sich bei diesem Vorgang mit der Polymerschmelze; die Luft kann unter den Dichtlippen 6 entweichen. Der bewegliche eingelegte, konvexe Oberstempel 7, 8 wird mit seiner Rückseite bis an die Platte 9 der Zuhaltevorrichtung der Spritzgußmaschine gedrückt. Dadurch wird das gefüllte Formwerkzeug der Zuhaltevorrichtung entnommen, mit einer die Mündung des Angußkanals 3 abdichtenden Dichtplatte 11 versehen und das Formwerkzeug mit Dichtplatte 11 in eine Spannvorrichtung eingebracht. In Richtung der Pfeile 12, 13, 14 und 15 wirkt nun jeweils eine Kraft von 1 bis 100 kg, bevorzugt 5 bis 20 kg. Da die Fläche der Kavität etwa 1 cm² beträgt, wirkt auf die eingepreßte Thermoplastmasse ein Druck von 1 bis 100 bar, vorzugsweise 5 bis 20 bar. Unter diesem Druck läßt man das Formwerkzeug langsam innerhalb von 10 bis 30 Minuten auf Temperaturen unterhalb 60°C erkalten. Durch Herausdrücken des Oberstempels 7, 8 in Pfeilrichtung 13 läßt sich das Halbfertigzeug 4 der Hülse 5 entnehmen und von dem Bodenstempel 1 ablösen.

Fig. 2 zeigt das Kontaktlinsen-Halbfertigzeug 16 mit Angußzapfen 17. Der Zapfen 17 wird abgeschnitten. Das spannungs-und schlierenfreie Halbfertigzeug 16 besitzt auf seiner Innenfläche 18 einen konkaven Abdruck des konvexen Glasteils 8 mit bevorzugt asphärischer Geometrie.

Die aus den nach dem erfindungsgemäßen Verfahren hergestellten Halbfertigzeugen gefertigten Kontaktlinsen zeichnen sich durch eine besonders gute Stabilität der Radien und der Rückflächen-Geometrien und einer vom Oberstempel 7, 8 vorgegebenen geringen Rauhtiefe von unter 0,1 μm, bevorzugt 0,05 μm, aus. Wie die Untersuchung in polarisiertem Licht zeigt, weisen die erfindungsgemäß hergestellten Kontaktlinsen so gut wie keine Verspannungen auf, was wahrscheinlich für die verbesserte Formstabilität ausschlaggebend ist. Im Vergleich dazu zeigen auf konventionelle Weise (z.B. durch Spritzguß) erhaltene Kontaktlinsen häufig sehr deutliche und asymmetrische Verspannungen, deren Muster vor allem von der Fließrichtung des Spritzgusses während des Verspritzungsprozesses bestimmt wird, und die daher zu Änderungen der Geometrie während des Tragens neigen bzw. optische Schlieren enthalten.

Ein besonderer Vorteil des erfindungsgemäßen Verfahrens und des erfindungsgemäßen Formwerkzeuges ist, daß man mit relativ leicht herzustellenden und einfachen Formwerkzeugen arbeiten kann und den für die Präzision wichtigen Oberstempel 7, 8 außerhalb der Form durch herkömmliche Techniken des Schleifens und Polierens herstellen kann. Man kommt mit weniger Formgeometrien aus und erreicht die Vielzahl der Rezepte durch Einlegen von konkaven Oberstempeln 7, 8 unterschiedlicher Geometrien. Das Spritzgießen und Erkalten der Schmelze kann hier in einem Formwerkzeug durchgeführt werden. Da das Erkalten außerhalb der Zuhaltevorrichtung der Spritzgußmaschine erfolgt, kann die Spritzgußmaschine mit hohen Zyklusgeschwindigkeiten arbeiten. Hierdurch wird das Verfahren äußerst wirtschaftlich.

Aus den erfindungsgemäß hergestellten Rohlingen lassen sich in an sich bekannter Weise wie bei konventionellen Blanks Kontaktlinsen fertigen. Diese geschieht z.B. durch Fräsen, Drehen, Schleifen und Polieren der Stirnflächen, wodurch die gewünschten Scheitelbrechwerte erzielt werden.

**Ansprüche**

1. Verfahren zur Herstellung eines spannungs- und schlierenfreien Kontaktlinsen-Halbfertigzeugs mit vollständig ausgebildeter Rückflächen-Geometrie durch Spritzpressen von thermoplastischen Materialien, dadurch gekennzeichnet, daß man

a) zuerst in ein aufgeheiztes Formwerkzeug mit einem Bodenstempel, einer auf dem Bodenstempel mit Dichtlippen dicht aufliegenden Führungshülse und einem in der Führungshülse axial verschiebbaren Oberstempel mit einer der Rückflächen-Geometrie der Kontaktlinse angepaßten konvexen Stempeloberfläche die Schmelze des thermoplastischen Materials durch einen Angußkanal einspritzt und dann

b) den Angußkanal des noch heißen Formwerkzeuges mit einer Gegenplatte verschließt, das Formwerkzeug in eine Spannvorrichtung einlegt und unter Druck das Halbfertigzeug erkalten läßt.

2. Verfahren nach Anspruch 1, dadurch gekennzeichnet, daß das thermoplastische Material bei Temperaturen, die 50°C bis 150°C oberhalb der Glasübergangstemperatur liegen, als Schmelze in das Formwerkzeug eingebracht wird, wobei das Formwerkzeug eine Temperatur besitzt, die 20°C bis 80°C oberhalb der Glasübergangstemperatur des thermoplastischen Materials liegt.

3. Verfahren nach Ansprüchen 1 und 2, dadurch gekennzeichnet, daß durch Einspannen des Formwerkzeuges innerhalb des Formwerkzeuges ein Druck von 1 bis 100 bar, bevorzugt 5 bis 20 bar, während der Abkühlphase aufrechterhalten wird.

4. Verfahen nach Ansprüchen 1 bis 3, dadurch gekennzeichnet, daß das Formwerkzeug innerhalb von 10 Minuten bis 30 Minuten auf Temperaturen unter 60°C abgekühlt wird.

5. Verfahren nach Ansprüchen 1 bis 4, dadurch gekennzeichnet, daß die der Rückfläche gegenüberliegende Stirnfläche des Halbfertigzeuges in an sich bekannter Weise durch Fräsen, Drehen, Schleifen und Polieren bearbeitet wird, bis der gewünschte Scheitelbrechwert erzielt ist.

6. Formwerkzeug zum Spritzpressen von spannungs-und schlierenfreien Kontaktlinsen-Halbfertigzeugen mit vollständig ausgebildeter Rückflächen-Geometrie aus thermoplastischen Materialien nach dem Verfahren gemäß Ansprüchen 1 bis 5, gekennzeichnet durch eine zylindrische Führungshülse (5), die an der einen Seite mit einem Bodenstempel (1) abgeschlossen ist, durch den ein Angußkanal (3) hindurchgeführt ist, und auf der anderen Seite einen in der Führungshülse (5) axial verschiebbaren Oberstempel (7, 8) aufweist, der eine der Rückflächen-Geometrie des Kontaktlinsen-Halbfertigzeugs entsprechende konvexe Kontur besitzt.

7. Formwerkzeug nach Anspruch 6, dadurch gekennzeichnet, daß der Oberstempel (7, 8) aus zwei Teilen, einem Metallteil (7) mit planarer Oberfläche und ein an das Metallteil bündig anschließendes Glasteil (8), besteht, dessen konvex geschliffene und polierte Oberfläche entsprechend der Rückflächen-Geometrie des Kontaktlinsen-Halbfertigzeuges geformt ist.

8. Formwerkzeug nach Ansprüchen 6 und 7, dadurch gekennzeichnet, daß der Bodenstempel - (1) eine der Formkavität (4) zugewandte planare Fläche aufweist.

9. Formwerkzeug nach Ansprüchen 6 und 7, dadurch gekennzeichnet, daß der Bodenstempel - (1) eine der Formkavität (4) zugewandte konkave Fläche aufweist.

10. Formwerkzeug nach Ansprüchen 6 bis 9, dadurch gekennzeichnet, daß die der Rückflächen-Geometrie des Kontaktlinsen-Halbfertigzeuges entsprechende konvex gekrümmte Fläche des Oberstempels (7, 8) eine asphärische Geometrie aufweist.

11. Halbfertigzeug für die Herstellung von Kontaktlinsen nach dem Verfahren gemäß Anspüchen 1 bis 5 in Form eines zylindrischen Knopfes, dessen Rückflächen-Geometrie einer Oberfläche der herzustellenden Kontaktlinse entspricht und dessen Stirnfläche vorzugsweise plan ist, dadurch gekennzeichnet, daß der Knopf weitgehend spannungsfrei ist und seine Rückfläche eine asphärische Geometrie aufweist.

12. Halbfertigzeug nach Anspruch 11, dadurch gekennzeichnet, daß die Rauhtiefe der Rückfläche des Kontaktlinsen-Halbfertigzeugs unter 0,1 μm, bevorzugt unter 0,05 μm, liegt.

FIG. 1

FIG. 2